(19) Europäisches Patentamt
European Patent Office
Office européen des brevets

(11) EP 3 519 506 B1

(12) EUROPEAN PATENT SPECIFICATION

(45) Date of publication and mention of the grant of the patent:
**17.02.2021 Bulletin 2021/07**

(21) Application number: **16917169.1**

(22) Date of filing: **29.09.2016**

(51) Int Cl.:
***C08L 101/00*** *(2006.01)* ***C09D 201/06*** *(2006.01)*
***C04B 41/63*** *(2006.01)* ***C04B 41/00*** *(2006.01)*

(86) International application number:
**PCT/CN2016/100756**

(87) International publication number:
**WO 2018/058415 (05.04.2018 Gazette 2018/14)**

(54) **AQUEOUS POLYMER COMPOSITION**
WÄSSRIGE POLYMERZUSAMMENSETZUNG
COMPOSITION POLYMÈRE AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.08.2019 Bulletin 2019/32**

(73) Proprietors:
- **Dow Global Technologies, LLC**
  **Midland, MI 48674 (US)**
- **Rohm and Haas Company**
  **Collegeville, PA 19426 (US)**

(72) Inventors:
- **HU, Yuehan**
  **Shanghai 201203 (CN)**
- **LIU, Han**
  **Shanghai 201203 (CN)**
- **DONG, Xiangting**
  **Shanghai 201203 (CN)**
- **WANG, Yujiang**
  **Shanghai 201203 (CN)**

(74) Representative: **Houghton, Mark Phillip**
**Patent Outsourcing Limited**
**Cornerhouse**
**1 King Street**
**Bakewell**
**Derbyshire DE45 1DZ (GB)**

(56) References cited:
**EP-A1- 0 854 153** **EP-A2- 1 260 553**
**EP-A2- 1 260 554** **JP-A- 2000 281 937**
**US-A1- 2007 255 000** **US-B2- 7 105 593**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 519 506 B1

## Description

### FIELD OF THE INVENTION

The present invention relates to an aqueous polymer composition and a coating composition comprising the same.

### INTRODUCTION

Concrete roof tiles are susceptible to efflorescence, the formation of white mineral deposits on the surface of the concrete roof tiles. These white mineral deposits are unevenly distributed on the surface and produce an unsightly mottle appearance. Efflorescence also detracts from the appearance of the concrete roof tile by diminishing the color intensity of a colored concrete roof tile. To minimize efflorescence, multilayer coating systems comprising at least one primer coat and at least one topcoat, where the primer coat resides between a substrate being coated and the topcoat, are usually used. However, significant challenges remain in terms of cost reduction, production efficiency and compatibility between the primer coat and the topcoat. It is thus desirable to provide a coating composition that is suitable to be applied to a substrate and capable of providing both functions of a primer and a topcoat.

US7105593B2 discloses an aqueous polymer blend composition comprising high molecular weight particles with low molecular weight particles. Unfortunately, the efflorescence performance of coatings obtained from such composition still needs to be further improved.

In exterior coating applications, weather durability is also a key property for topcoats to enable coatings to maintain color and gloss upon exposure to the elements such as sunlight.

Therefore, there remains a need to provide an aqueous polymer composition suitable for coating applications to provide coatings with improved efflorescence resistance and good weather durability without requiring application of an additional primer.

### SUMMARY OF THE INVENTION

The present invention provides an aqueous polymer composition comprising a novel combination of different polymer particles in a bimodal distribution. A coating composition comprising the aqueous polymer composition is particularly useful for preparing topcoats without requiring application of a primer. The coating composition of the present invention is stable after heat aging at 50 °C for at least 10 days as indicated by $\Delta$KU (Krebs Units) of 10 or less (that is, good heat-age stability). The coating composition also provides coatings with improved efflorescence resistance, for example, showing an efflorescence score of 45% or higher as measured by the JG/T 210-2007 method. The coatings may also show good weather durability as indicated by $\Delta$b value of 1.5 or less after 600 hours QUV test. The heat-age stability and weather durability properties were measured according to the test methods described in the Examples section below.

In a first aspect, the present invention is an aqueous polymer composition comprising:

a fine mode of first polymer particles and a large mode of second polymer particles,
wherein the first polymer particles have an average diameter of from 55 nanometers (nm) to 120 nm and a glass transition temperature of from 0°C to 50°C, and wherein the first polymer particles comprise as polymerized units, based on the weight of the first polymer particles, from 0.1% to 20% by weight of an epoxy functional monomer and less than 0.5% by weight of an $\alpha$, $\beta$-ethylenically unsaturated carboxylic acid; and
wherein the second polymer particles have an average diameter of larger than 120 nm and comprise, as polymerized units, based on the weight of the second polymer particles, less than 1.3% by weight of an $\alpha$, $\beta$-ethylenically unsaturated carboxylic acid; and
wherein the weight ratio of the first polymer particles to the second polymer particles is from 40:60 to 75:25.

In a second aspect, the present invention is a coating composition comprising the aqueous polymer composition of the first aspect.

In a third aspect, the present invention is a method of improving efflorescence resistance of a coating. The method comprises:

(i) providing a coating composition of the second aspect,
(ii) applying the coating composition to a substrate; and
(iii) drying, or allowing to dry, the coating composition to obtain the coating having improved efflorescence resistance.

DETAILED DESCRIPTION OF THE INVENTION

"Acrylic" as used herein includes (meth)acrylic acid, (meth)alkyl acrylate, (meth)acrylamide, (meth)acrylonitrile and their modified forms such as (meth)hydroxyalkyl acrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

"Glass transition temperature" or "$T_g$" as used herein, can be measured by various techniques including, for example, differential scanning calorimetry ("DSC") or calculation by using a Linear equation. For example, $T_g$ of an emulsion polymer comprising polymerized units of Monomers a, b, and c, is determined according to the following linear equation:

$$T_g = W_a*T_{ga} + W_b*T_{gb} + W_c*T_{gc}$$

wherein $T_{ga}$, $T_{gb}$, and $T_{gc}$ refer to $T_g$ of the homopolymer of Monomer a, the homopolymer of Monomer b, and the homopolymer of Monomer c, respectively; and $W_a$, $W_b$, and $W_c$ refer to the weight fraction of Monomer a, Monomer b, and Monomer c used for preparing the emulsion polymer, based on the weight of total monomers, respectively.

"Cementitious substrate" as used herein refers to an article prepared from a cement mix or having a surface coated with cement mix. A cement mix is a mixture including cement, sand, and water. A polymer may optionally be included in the mixture.

The aqueous polymer composition of the present invention may comprise two populations of particle mode, a fine mode of first polymer particles and a large mode of second polymer particles, wherein each of the two populations appears as a separate peak in a particle size distribution plot, due to the difference in diameter of each mode. That is, polymer particles in the aqueous polymer composition have a bimodal distribution. By particle "diameter" herein refers to the average diameter of polymer particles by intensity as measured by a Brookhaven BI-90 or 90Plus.

The first polymer particles in the aqueous polymer composition have an average diameter of 55 nm or more, 58 nm or more, 60 nm or more, 65 nm or more, 70 nm or more, or even 75 nm or more, and at the same time, 120 nm or less, 110 nm or less, 100 nm or less, 95 nm or less, 90 nm or less, or even 85 nm or less.

The second polymer particles in the aqueous polymer composition have an average diameter of larger than 120 nm, for example, 125 nm or more, 130 nm or more, 132 nm or more, 135 nm or more, or even 137 nm or more, and at the same time, 500 nm or less, 450 nm or less, 400 nm or less, 300 nm or less, or even 250 nm or less.

The first polymer particles and the second polymer particles in the aqueous polymer composition are present at a specific weight ratio, which surprisingly has impacts on the efflorescence performance of coatings made therefrom. The weight ratio of the first polymer particles to the second polymer particles is from 40:60 to 75:25, from 45:55 to 70:30, from 50:50 to 65:35, or from 55:45 to 60:40. "Weight ratio" herein refers to the weight ratio of solids (or dry weight) of the first polymer particles to solids (or dry weight) of the second polymer particles.

The first polymer particles in the aqueous polymer composition comprise as polymerized units, one or more epoxy functional monomers. The epoxy functional monomer useful in the present invention may be an ethylenically unsaturated epoxy functional monomer, and preferably an epoxy functional alkyl ester of (meth)acrylic acid. Examples of suitable epoxy functional monomers include glycidyl acrylate, glycidyl methacrylate (GMA), allyl glycidyl, or mixtures thereof. Preferred epoxy functional monomer is glycidyl methacrylate. Preferably, the first polymer particles comprise a two-stage polymer comprising a first-stage polymer and a second-stage polymer, where the second-stage polymer comprises polymerized units of one or more epoxy functional monomers. The first polymer particles comprise as polymerized units, based on the weight of the first polymer particles, 0.1% by weight or more, 0.5% by weight or more, 1.0% by weight or more, or even 2.0% by weight or more, and at the same time, 20% by weight or less, 15% by weight or less, 10% by weight or less, or even 8% by weight or less, of the epoxy functional monomers. "Weight of the first polymer particles" in the present invention refers to dry weight or solids weight of the first polymer particles.

The first and second polymer particles in the aqueous polymer composition each independently comprise as polymerized units, one or more $\alpha$, $\beta$-ethylenically unsaturated carboxylic acids. Examples of suitable $\alpha$, $\beta$-ethylenically unsaturated carboxylic acids include an acid-bearing monomer such as (meth)acrylic acid, itaconic acid, or fumaric acid; or a monomer bearing an acid-forming group which yields or is subsequently convertible to, such an acid group (such as anhydride, (meth)acrylic anhydride, or maleic anhydride); or mixtures thereof. The first polymer particles comprise as polymerized units, based on the weight of the first polymer particles, from 0 to less than 0.5% by weight of the $\alpha$, $\beta$-ethylenically unsaturated carboxylic acids, for example, 0.4% by weight or less, 0.3% by weight or less, or even 0.2% by weight or less, of the $\alpha$, $\beta$-ethylenically unsaturated carboxylic acid. Preferably, the first polymer particles are substantially free, for example, less than 0.1% by weight, of polymerized units of the $\alpha$, $\beta$-ethylenically unsaturated carboxylic acids. The second polymer particles comprise as polymerized units, based on the weight of the second polymer particles, less than 1.3% by weight of the $\alpha$, $\beta$-ethylenically unsaturated carboxylic acid, for example, 1.1% by weight or less, 1%

by weight or less, 0.8% by weight or less, 0.6% by weight or less, or even 0.5% by weight or less, of the $\alpha$, $\beta$-ethylenically unsaturated carboxylic acids. "Weight of the second polymer particles" in the present invention refers to dry weight or solids weight of the second polymer particles.

The first and second polymer particles may each independently comprise, as polymerized units, one or more ethylenically unsaturated monomers carrying at least one functional group selected from amide, hydroxyl, ureido, sulfonate, or combinations thereof, preferably amide, sulfonate, ureido, or combinations thereof. Suitable ethylenically unsaturated monomers carrying at least one functional group may include amide-functional ethylenically unsaturated monomers; hydroxy-functional (meth)acrylic acid alkyl ester; sodium styrene sulfonate (SSS), sodium vinyl sulfonate (SVS), or mixtures thereof. The amide-functional ethylenically unsaturated monomers useful in the present invention may include, for example, acrylamide, N-methylacrylamide, N-ethylacrylamide, N-isopropylacrylamide, N-butylacrylamide, N-tertiary butylacrylamide, N-2-ethylhexylacrylamide, N,N-dimethylacrylamide, N,N-diethylacrylamide and diacetoneacrylamide. The hydroxy-functional (meth)acrylic acid alkyl ester useful in the present invention may have the structure of formula (I):

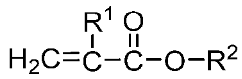

(I)

wherein $R^1$ is hydrogen or methyl, and $R^2$ is a hydroxyalkyl group having from 2 to 6 carbon atoms. Examples of suitable hydroxy-functional (meth)acrylic acid alkyl esters include 2-hydroxyethyl acrylate; 2-hydroxyethyl methacrylate; and 2-hydroxyethyl ethacrylate; hydroxypropyl (meth)acrylate including, for example, 2-hydroxypropylacrylate, 2-hydroxypropyl methacrylate, 3-hydroxypropyl acrylate, 3-hydroxypropyl methacrylate; hydroxybutyl (meth)acrylate including, for example, 3-hydroxybutyl acrylate, 3-hydroxybutyl methacrylate, 4-hydroxybutyl acrylate, and 4-hydroxybutyl methacrylate; 6-hydroxyhexyl acrylate; 6-hydroxyhexylmethacrylate; 3-hydroxy-2-ethylhexyl acrylate; 3-hydroxy-2-ethylhexyl methacrylate; or mixtures thereof. The ureido-functional (meth)acrylic acid alkyl ester useful in the present invention may be a compound containing an acrylate or methacrylate group and a cyclic ureido group (i.e., an imidazolidin-2-one group). Preferred ureido-functional (meth)acrylic acid alkyl esters include ureido methylacrylate, ureido acrylate, or mixtures thereof. More preferred ureido-functional (meth)acrylic acid alkyl esters include:

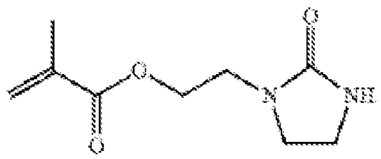,
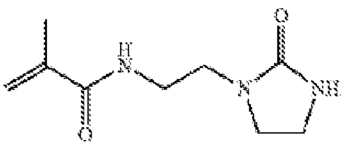,
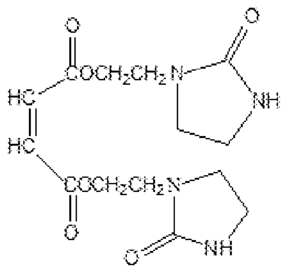,

or mixtures thereof. The first and second polymer particles may each independently comprise as polymerized units, based on the weight of the first or second polymer particles, respectively, 0.2% by weight or more of the ethylenically unsaturated monomer carrying at least one functional group, 0.5% by weight or more, or even 1% by weight or more, and at the same time, 8% by weight or less, 6% by weight or less, or even 5% by weight or less.

The first and second polymer particles in the aqueous polymer composition may each independently further comprise, as polymerized units, one or more additional nonionic monoethylenically unsaturated monomers that are different from the monomers described above. Suitable additional nonionic monoethylenically unsaturated monomers include $C_1$-$C_{24}$ alkyl (meth)acrylates, such as methyl (meth)acrylate, ethyl (meth)acrylate, propyl (meth)acrylate, butyl (meth)acrylate, 2-ethylhexyl (meth)acrylate, isobutyl (meth) acrylate, hexyl (meth)acrylate, cyclohexyl (meth)acrylate, benzyl(meth)acrylate, lauryl(meth)acrylate, oleyl(meth)acrylate, palmityl (meth)acrylate, stearyl(meth)acrylate, nonyl(meth)acrylate, decyl(meth)acrylate, dodecyl (meth)acrylate, pentadecyl (meth) acrylate, hexadecyl (meth)acrylate, octadecyl (meth)acrylate, and the like; (meth)acrylonitrile, or mixtures thereof.

The first and second polymer particles may further comprise, as polymerized units, other suitable nonionic monoethylenically unsaturated monomers, for example, styrene and substituted styrene such as .alpha.-methyl styrene, p-methyl styrene, t-butyl styrene, vinyltoluene; ethylene, propylene, 1 -decene; or other vinyl monomers such as vinyl acetate, vinyl butyrate, vinyl versatate and other vinyl esters, vinyl chloride, vinylidene chloride or mixtures thereof. Preferred additional nonionic monoethylenically unsaturated monomers in the first polymer particles are styrene, 2-ethylhexyl(meth)acrylate, methyl methacrylate, butyl acrylate, or mixtures thereof. The first polymer particles may comprise as polymerized units, based on the weight of the first polymer particles, from 0% to 99.8% by weight, from 50% to 99% by weight, from 70% to 98% by weight, or from 80% to 95% of the additional nonionic monoethylenically unsaturated monomers. Preferred additional nonionic monoethylenically unsaturated monomers in the second polymer particles are butyl acrylate, methyl(meth)acrylate, 2-ethylhexyl(meth)acrylate, styrene, or mixtures thereof. The second polymer particles may comprise as polymerized units, based on the weight of the second polymer particles, from 0% to 99.9% by weight, from 50% to 99% by weight, or from 70% to 98% by weight, of the additional nonionic monoethylenically unsaturated monomers.

The first and second polymer particles in the aqueous polymer composition may each independently further comprise, as polymerized units, one or more multiethylenically unsaturated monomers. The multiethylenically unsaturated monomers useful in the present invention may include di-, tri-, tetra-, or higher multifunctional ethylenically unsaturated monomers. Examples of suitable multiethylenically unsaturated monomers include butadiene, allyl(meth)acrylate, divinyl benzene, ethylene glycol dimethacrylate, butylene glycol dimethacrylate, or mixtures thereof. The first polymer particles may comprise as polymerized units, based on the weight of the first polymer particles, from 0 to less than 0.35% by weight, less than 0.3% by weight, or even less than 0.2% by weight, of the multiethylenically unsaturated monomer. In one embodiment, the first polymer particles are substantially free of polymerized units of the multiethylenically unsaturated monomer. The second polymer particles may comprise as polymerized units, based on the weight of the second polymer particles, from 0 to 0.35% by weight of the multiethylenically unsaturated monomer, from 0.01% to 0.3 % by weight, or from 0.05% to 0.2% by weight.

The first and second polymer particles in the aqueous polymer composition may each independently further comprise, as polymerized units, one or more ethylenically unsaturated monomers having at least one alkoxysilane functionality (hereinafter referred to as "alkoxysilane-functional ethylenically unsaturated monomer"). Such alkoxysilane-functional ethylenically unsaturated monomer useful in the present invention may have the following formula (II):

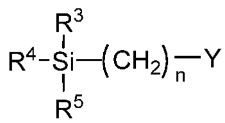

(II)

wherein $R^3$, $R^4$, and $R^5$ are each independently selected from the group consisting of a alkoxy group such as a $C_1$-$C_8$ or $C_1$-$C_4$ alkoxy group and an alkyl group such as a $C_1$-$C_{10}$ or $C_1$-$C_8$ alkyl group with the proviso that at least one alkoxy group is present; n is an integer from 0 to 4 or from 1 to 3; and Y is a group selected from vinyl, methacryloxy, or mixtures thereof, preferably methacryloxy. Examples of suitable alkoxysilane-functional ethylenically unsaturated monomers include vinyltrialkoxysilanes such as vinyltrimethoxysilane, vinyl triethoxy silane, and vinyl tris($\beta$-methoxy ethoxy)-silane; alkylvinyldialkoxysilanes such as vinylmethyldimethoxysilane; (meth)acryloxyalkyltrialkoxysilanes such as (meth)acryloxyethyltrimethoxysilane and (meth)acryloxypropyltrimethoxysilane; or mixtures thereof. Suitable commercially available such monomers include, for example, SILQUEST A-174 $\gamma$-methacryloxypropyl trimethoxysilane and SILQUEST A-171 vinyltrimethoxysilane available from Momentive Performance Materials Inc., or mixtures thereof. The first and second polymer particles may each independently comprise as polymerized units, based on the weight of the first or second polymer particles, respectively, from 0.01% to 5% by weight, from 0.05% to 4% by weight, or from 0.1% to 3% by weight, of the alkoxysilane-functional ethylenically unsaturated monomer.

Total weight concentration of the monomers described above that constitute polymerized units of the first or second polymer particles, respectively, may be equal to 100%. In one embodiment, the first polymer particles comprise as polymerized units, based on the weight of the first polymer particles, from 0.1% to 10% by weight of the epoxy functional monomer such as glycidyl methacrylate, glycidyl acrylate, or mixtures thereof; from 1% to 5% by weight of the ethylenically unsaturated monomer carrying at least one functional group; and from 85% to 98.9% by weight of the additional nonionic monoethylenically unsaturated monomers such as styrene, 2-ethylhexyl(meth)acrylate, methyl methacrylate, butyl acrylate, or mixtures thereof.

In another embodiment, the second polymer particles comprise as polymerized units, based on the weight of the second polymer particles, from 1% to 8% by weight of the ethylenically unsaturated monomer carrying at least one functional group; from 90.8% to 99% by weight of the additional nonionic monoethylenically unsaturated monomers such butyl acrylate, methyl methacrylate, or mixtures thereof; from 0 to 1% by weight of the $\alpha$, $\beta$-ethylenically unsaturated carboxylic acid such as methyl acrylic acid; and from 0 to 0.2% by weight of the multiethylenically unsaturated monomer such as allyl(meth)acrylate.

The types and levels of the monomers described above, as polymerized units, may be chosen to provide the first or second polymer with a glass transition temperature ($T_g$) suitable for different applications. The first polymer particles have a $T_g$ of 0°C or more, 5°C or more, 10°C or more, 15°C or more, or even 20°C or more, and at the same time, 50°C or less, 40°C or less, 35°C or less, or even 30°C or less. The second polymer particles may have a $T_g$ of 0°C or more, 10°C or more, 20°C or more, or even 25°C or more, and at the same time, 50°C or less, 40°C or less, 35°C or

less, 32°C or less, or even 30°C or less.

The first polymer particles in the aqueous polymer dispersion may have a weight average molecular weight of from 10,000 to 300,000, from 20,000 to 200,000, or from 30,000 to 100,000. The second polymer particles may have a weight average molecular weight of from 50,000 to 400,000, from 80,000 to 350,000, or from 100,000 to 300,000. Molecular weight in the present invention may be measured by Gel Gel Permeation Chromatography (GPC) with a polystyrene standard.

The aqueous polymer composition of the present invention may be prepared by mixing or blending together the fine mode of first polymer particles and the large mode of second polymer particles at the appropriate weight ratio described above to form the aqueous polymer composition. The aqueous polymer composition may also be prepared by a one-pot process. "One-pot process" herein means that both modes of the polymer particles are synthesized during the same process, which can be batch, semi-continuous, or continuous.

The first or second polymer particles useful in the present invention may be prepared by free-radical polymerization, such as suspension polymerization or emulsion polymerization, of the monomers described above. Emulsion polymerization is a preferred process. Monomers for preparing the first and second polymer particles may include those monomers described above that are used for constituting polymerized units of the first and second polymer particles, respectively. Total weight concentration of monomers for preparing the first polymer particles and the second polymer particles, respectively, is equal to 100%. The weight content of each monomer based on the total weight of monomers for preparing the first polymer particles may be substantially the same as the weight content of such monomer as polymerized units of the first polymer particles based on the weight of the first polymer particles. Also, the weight content of each monomer based on the total weight of monomers for preparing the second polymer particles may be substantially the same as the weight content of such monomer as polymerized units of the second polymer particles based on the weight of the second polymer particles. A mixture of monomers may be added neat or as an emulsion in water; or added in one or more additions or continuously, linearly or nonlinearly, over the reaction period of preparing the first and second polymer particles, respectively. Temperature suitable for emulsion polymerization processes may be lower than 100°C, in the range of from 30 to 98°C, or in the range of from 50 to 95°C. Multistage free-radical polymerization using the monomers described above can be used, which at least two stages are formed sequentially, and usually results in the formation of the multistage polymer comprising at least two polymer compositions. In some embodiments, the first polymer particles are prepared by multistage emulsion polymerization, preferably two-stage emulsion polymerization with the epoxy functional monomer used in the second stage.

In the polymerization process of preparing the first or second polymer particles, free radical initiators may be used. The polymerization process may be thermally initiated or redox initiated emulsion polymerization. Examples of suitable free radical initiators include hydrogen peroxide, t-butyl hydroperoxide, cumene hydroperoxide, ammonium and/or alkali metal persulfates, sodium perborate, perphosphoric acid, and salts thereof; potassium permanganate, and ammonium or alkali metal salts of peroxydisulfuric acid. The free radical initiators may be used typically at a level of 0.01 to 3.0% by weight, based on the total weight of monomers. Redox systems comprising the above described initiators coupled with a suitable reductant may be used in the polymerization process. Examples of suitable reductants include sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, acetone bisulfite, glycolic acid, hydroxymethanesulfonic acid, glyoxylic acid hydrate, lactic acid, glyceric acid, malic acid, tartaric acid and salts of the preceding acids. Metal salts of iron, copper, manganese, silver, platinum, vanadium, nickel, chromium, palladium, or cobalt may be used to catalyze the redox reaction. Chelating agents for the metals may optionally be used.

In the polymerization process of preparing the first or second polymer particles, a surfactant may be used. The surfactant may be added prior to or during the polymerization of the monomers, or combinations thereof. A portion of the surfactant can also be added after the polymerization. These surfactants may include anionic and/or nonionic emulsifiers. Examples of suitable surfactants include alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. In some preferred embodiments, the alkali metal or ammonium salts of alkyl, aryl, or alkylaryl sulfates surfactant are used. The surfactant used is usually from 0.1% to 10% by weight, preferably from 0.2% to 3% by weight, based on the weight of total monomers used for preparing the first or second polymer particles.

In the polymerization process of preparing the first or second polymer particles, a train transfer agent may be used. Examples of suitable chain transfer agents include 3-mercaptopropionic acid, n-dodecyl mercaptan, methyl 3-mercaptopropionate, butyl 3-mercaptopropionate, benzenethiol, azelaic alkyl mercaptan, or mixtures thereof. The chain transfer agent may be used in an effective amount to control the molecular weight of the first or second polymer particles. Preferably, the chain transfer agent is used in preparing the first polymer particles. The chain transfer agent may be used in an amount from 0 to 2% by weight, from 0.01% to 1.5% by weight, or from 0.05% to 1% by weight, based on the total weight of monomers used for preparing the first or second polymer particles.

After completing the polymerization of the first or second polymer particles, the obtained polymer particles may be neutralized by one or more bases as neutralizers to a pH value, for example, at least 5, from 6 to 10, or from 6.5 to 8.5. The bases may lead to partial or complete neutralization of the ionic or latently ionic groups of the first or second polymer particles. Examples of suitable bases include ammonia; alkali metal or alkaline earth metal compounds such as sodium hydroxide, potassium hydroxide, calcium hydroxide, zinc oxide, magnesium oxide, sodium carbonate; primary, secondary, and tertiary amines, such as mono ethanol amine, 2-Amino-2-methyl-1-propanol, triethyl amine, ethylamine, propylamine, monoisopropylamine, monobutylamine, hexylamine, ethanolamine, diethyl amine, dimethyl amine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminoethylamine, 2,3-diaminopropane, 1,2-propylenediamine, neopentanediamine, dimethylaminopropylamine, hexamethylenediamine, 4,9-dioxadodecane-1,12-diamine, polyethyleneimine or polyvinylamine; aluminum hydroxide; or mixtures thereof.

The aqueous polymer composition of the present invention may further comprise water. The concentration of water may be, by weight based on the total weight of the aqueous polymer composition, from 30% to 90%, from 40% to 80%, or from 50% to 70%.

The present invention also relates to a coating composition comprising the aqueous polymer composition. The coating composition of the present invention may further comprise pigments and/or extenders to form pigmented coating compositions (also known as "paint formulations"). "Pigment" herein refers to a particulate inorganic material which is capable of materially contributing to the opacity or hiding capability of a coating. Such materials typically have a refractive index greater than 1.8 and include titanium dioxide ($TiO_2$), zinc oxide, iron oxide, zinc sulfide, barium sulfate, barium carbonate, or mixture thereof. In a preferred embodiment, pigment used in the present invention is $TiO_2$. $TiO_2$ typically exists in two crystal forms, anastase and rutile. Suitable commercially available $TiO_2$ include, for example, KRONOS 2310 available from Kronos Worldwide, Inc., Ti-Pure R-706 available from DuPont (Wilmington, Del.), TiONA AT1 available from Millenium Inorganic Chemicals, or mixtures thereof. $TiO_2$ may be also available in concentrated dispersion form. "Extender" herein refers to a particulate inorganic material having a refractive index of less than or equal to 1.8 and greater than 1.3. Examples of suitable extenders include calcium carbonate, clay, calcium sulfate, aluminosilicates, silicates, zeolites, mica, diatomaceous earth, solid or hollow glass, ceramic beads, nepheline syenite, feldspar, diatomaceous earth, calcined diatomaceous earth, talc (hydrated magnesium silicate), silica, alumina, kaolin, pyrophyllite, perlite, baryte, wollastonite, solid or hollow polymeric particles such as ROPAQUE™ Ultra E opaque polymers available from The Dow Chemical Company (ROPAQUE is a trademark of The Dow Chemical Company), or mixtures thereof.

The coating composition of the present invention may have a pigment volume concentration (PVC) of from 18% to 60%, from 20% to 55%, or from 25% to 50%. PVC of a coating composition may be determined by the following equation:

$$\text{PVC(\%)} = \frac{\text{volume of pigment(s)} + \text{volume of extender(s)}}{\text{total dry volume of coating composition}}$$

The coating composition of the present invention may further comprise one or more defoamers. "Defoamers" herein refer to chemical additives that reduce and hinder the formation of foam. Defoamers may be silicone-based defoamers, mineral oil-based defoamers, ethylene oxide/propylene oxide-based defoamers, alkyl polyacrylates, or mixtures thereof. Suitable commercially available defoamers include, for example, TEGO Airex 902 W and TEGO Foamex 1488 polyether siloxane copolymer emulsions both available from TEGO, BYK-024 silicone deformer available from BYK, or mixtures thereof. The concentration of the defoamer may be, based on the total weight of the coating composition, generally from 0 to 1% by weight, from 0.01% to 0.8% by weight, or from 0.05% to 0.5% by weight.

The coating composition of the present invention may further comprise one or more thickeners. The thickeners may include polyvinyl alcohol (PVA), clay materials, acid derivatives, acid copolymers, urethane associate thickeners (UAT), polyether urea polyurethanes (PEUPU), polyether polyurethanes (PEPU), or mixtures thereof. Examples of suitable thickeners include alkali swellable emulsions (ASE) such as sodium or ammonium neutralized acrylic acid polymers; hydrophobically modified alkali swellable emulsions (HASE) such as hydrophobically modified acrylic acid copolymers; associative thickeners such as hydrophobically modified ethoxylated urethanes (HEUR); and cellulosic thickeners such as methyl cellulose ethers, hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, and 2-hydoxypropyl cellulose. Preferably, the thickener is a hydrophobically-modified hydroxy ethyl cellulose (HMHEC). The concentration of the thickener may be, based on the total weight of the coating composition, generally from 0 to 5% by weight, from 0.05% to 2% by weight, or from 0.1% to 1% by weight

The coating composition of the present invention may further comprise one or more wetting agents. "Wetting

agents" herein refer to chemical additives that reduce the surface tension of a coating composition, causing the coating composition to more easily spread across or penetrate the surface of a substrate. Wetting agents may be polycarboxylates, anionic, zwitterionic, or non-ionic. Suitable commercially available wetting agents include, for example, SURFYNOL 10 nonionic wetting agent based on an actacetylenic diol available from Air Products, BYK-346 and BYK-349 polyether-modified siloxanes both available from BYK, or mixtures thereof. The concentration of the wetting agent may be, based on the total weight of the coating composition, from 0 to 5% by weight, 0.01% to 2% by weight, or from 0.2% to 1% by weight.

The coating composition of the present invention may further comprise one or more coalescents. "Coalescents" herein refer to slow-evaporating solvents that fuse polymer particles into a continuous film under ambient condition. Examples of suitable coalescents include 2-n-butoxyethanol, dipropylene glycol n-butyl ether, propylene glycol n-butyl ether, dipropylene glycol methyl ether, propylene glycol methyl ether, propylene glycol n-propyl ether, diethylene glycol monobutyl ether, ethylene glycol monobutyl ether, ethylene glycol monohexyl ether, triethylene glycol monobutyl ether, dipropylene glycol n-propyl ether, n-butyl ether, or mixtures thereof. Preferred coalescents include dipropylene glycol n-butyl ether, ethylene glycol monobutyl ether, diethylene glycol monobutyl ether, n-butyl ether, or mixtures thereof. The concentration of the coalescent may be, based on the total weight of the coating composition, from 0 to 10% by weight, from 0.01% to 9% by weight, or from 1% to 8% by weight.

The coating composition of the present invention may further comprise one or more dispersants. Suitable dispersants include, for example, anionic polyelectrolyte dispersants such as co-polymerized maleic acid, co-polymers including co-polymerized acrylic acid, co-polymers including co-polymerized methacrylic acid, and the like; carboxylic acids containing molecules such as tartaric acid, succinic acid, and citric acid; or mixtures thereof. The concentration of the dispersant may be, based on the total weight of the coating composition, from 0 to 2.0% by weight, from 0.05% to 1.5% by weight, or from 0.1% to 1.0% by weight.

In addition to the components described above, the coating composition of the present invention may further comprise any one or combination of the following additives: buffers, neutralizers, humectants, mildewcides, biocides, anti-skinning agents, colorants, flowing agents, anti-oxidants, plasticizers, leveling agents, thixotropic agents, adhesion promoters, and grind vehicles. When present, these additives may be present in a combined amount of from 0.001% to 10% by weight, or from 0.01% to 2% by weight, based on the total weight of the coating composition.

The coating composition of the present invention may further comprise water. The concentration of water may be, by weight based on the total weight of the coating composition, from 30% to 90%, from 40% to 80%, or from 50% to 70%.

The coating composition of the present invention may be prepared by admixing the aqueous polymer composition with other optional components, e.g., pigments and/or extenders as described above. Components in the coating composition may be mixed in any order to provide the coating composition of the present invention. Any of the above-mentioned optional components may also be added to the composition during or prior to the mixing to form the coating composition. When the coating composition comprises pigment and/or extender, the pigments and/or extenders are preferably mixed with the dispersant to form a slurry of pigments and/or extender.

The coating composition, particularly the pigmented coating composition, can be stable at 50°C for at least 10 days, as indicated by ΔKU of 10, according to the test method described in the Examples section below. The coating composition of the present invention can provide coatings made therefrom with improved efflorescence resistance. "Improved efflorescence resistance" or "good efflorescence resistance" means a coating having an efflorescence score of 45% or more, 50% or more, or even 55% or more, after 144 hours alkaline solution treatment, according to the JG/T 210-2007 method described in the Examples section below. The coating may also show good weather durability, as indicated by Δb value of 1.5 or lower, 1.2 or lower, or even 1.0 or lower, after 600 hours QUV test, according to the test method described in the Examples section below.

Also disclosed is a process of using the coating composition of the present invention which may comprise the following: applying the coating composition to a substrate, and drying, or allowing to dry, the applied coating composition. The process of using the coating composition does not require applying a primer to the substrate prior to the application of the coating composition of the present invention.

Also disclosed is a method of preparing a coating. The method may comprise: forming the coating composition of the present invention, applying the coating composition to a substrate, and drying, or allowing to dry, the applied coating composition to form the coating.

The present invention also relates to a method of improving efflorescence resistance of a coating. The method may comprise (i) providing the coating composition of the present invention, (ii) applying the coating composition to a substrate; and (iii) drying, or allowing to dry, the coating composition to obtain the coating, wherein the coating has an improved efflorescence resistance as defined above.

The coating composition of the present invention can be applied to, and adhered to, various substrates. Examples of suitable substrates include wood, metals, plastics, foams, stones, elastomeric substrates, glass, fabrics, concrete, or cementitious substrates. The coating composition, preferably comprising the pigment, is suitable for various applications such as marine and protective coatings, automotive coatings, traffic paint, Exterior Insulation and Finish

Systems (EIFS), roof mastic, wood coatings, coil coatings, plastic coatings, powder coatings, can coatings, architectural coatings, and civil engineering coatings. The coating composition is particularly suitable for architectural coatings. The coating composition can be applied to a substrate without requiring the application of a primer, that is, the coating composition provides both functions of a primer and a topcoat. In one embodiment, the coating composition is applied directly to the substrate, so that the coating contacts with at least one portion of the substrate. In another embodiment, the coated substrate comprises a multilayer coating system consisting of two or more layers made from the coating composition.

The coating composition of the present invention can be applied to a substrate by incumbent means including brushing, dipping, rolling and spraying. The aqueous composition is preferably applied by spraying. The standard spray techniques and equipment for spraying such as air-atomized spray, air spray, airless spray, high volume low pressure spray, and electrostatic spray such as electrostatic bell application, and either manual or automatic methods can be used. After the coating composition of the present invention has been applied to a substrate, the coating composition can dry, or allow to dry, to form a film (this is, coating) at room temperature (20-25°C), or at an elevated temperature, for example, from 35°C to 60°C. The coating composition can be applied directly to the substrate without requiring applying a primer.

## EXAMPLES

Some embodiments of the invention will now be described in the following Examples, wherein all parts and percentages are by weight unless otherwise specified.

Materials used for making aqueous polymer compositions are given as follows,

2-Ethylhexyl acrylate ("EHA"), methyl acrylic acid ("MAA"), styrene ("ST"), butyl acrylate ("BA"), and methyl methacrylate ("MMA") are all available from Sinoreagent Group (China).

Acrylamide ("AM"), sodium styrene sulfonate ("SSS"), glycidyl methacrylate ("GMA"), n-dodecanethiol ("n-DDM"), ferrous sulfate ($FeSO_4 \cdot 7H_2O$), ethylene diamine tetraacetic acid ("EDTA"), tert-butyl hydroperoxide ("t-BHP"), isoascorbic acid ("IAA"), allyl methacrylate ("ALMA"), ammonia persulphate ("APS"), sodium persulphate ("SPS"), and NaOH are all available from Shanghai Chemical Reagent Co. Ltd.

Methacryloxyethyl ethylene urea ("MEUA") is available from The Dow Chemical Company.

SILQUEST A-171 Silane ("A-171"), available from Momentive Company, is a vinyl trimethoxysilane.

BRUGGOLITE FF6 ("FF6") reductant is available from Bruggemann Chemical.

DISPONIL FES 32 anionic surfactant ("FES-32") is available from Cognis.

RHODACAL DS-4 surfactant ("DS-4") is available from Solvay.

Materials used for preparing coating compositions are listed as follows,

NATROSOL 250 HBR water soluble hydroxylethyl cellulose, available from Ashland Aqualon Company, is used as a thickener.

Propylene glycol, available from Sinopharm Chemical Reagent Co., Ltd., is used as a co-solvent.

NOPCO™ NXZ, available from Nopco Chemicals Co. Ltd., is a nonionic silicon oil and used as a defoamer.

TI-PURE™ R-706 titanium dioxide is available from E. I. du Pont de Nemours and Company.

CC-700, available from Guangfu Building Materials Group (China), is calcium carbonate and used as an extender.

TEXANOL ester alcohol, available from Eastman, is trimethylpentanediol isobutyrate and used as a coalescent.

DISPELAIR CF256 defoamer, available from Blackburn Chemical Limited, is an emulsion of modified silicones.

Talc AT-1, available from Liaoning Haicheng Liluoxue TALC Limited Company, is a hydrated magnesium silicate and used as a pigment.

ACRYSOL™ RM-2020 NPR thickener, available from The Dow Chemical Company, is a nonionic hydrophobically modified ethylene oxide urethane (HEUR) (ACRYSOL is a trademark of The Dow Chemical Company).

ACRYSOL RM-8W thickener, available from The Dow Chemical Company, is a nonionic urethane type polymer.

AMP-95™ neutralizer (2-methyl-2-amino-propanol), OROTAN™ 1288 polyacid dispersant, TERGITOL™ 15-S-40 nonionic surfactant, TRITON™ EF-106 ("EF-106") nonionic surfactant, TAMOL™ 731A dispersant (a hydrophobic copolymer), KATHON™ LXE Biocide (a preservative), ROCIMA™ 362N preservative, and ROPAQUE Ultra E opaque polymer, are all available from The Dow Chemical Company (AMP-95, OROTAN, TERGITOL, TRITON, TAMOL, KATHON, ROCIMA are trademarks of The Dow Chemical Company).

The following standard analytical equipment and methods are used in the Examples.

## Particle Size Measurement

Particle size of polymer dispersions was measured by using Brookhaven BI-90 or 90Plus Particle Sizer, which employs the technique of photon correlation spectroscopy (light scatter of sample particles). This method involved diluting

2 drops of a polymer dispersion to be tested in 20 ml of 0.01 M NaCl solution, and further diluting the resultant mixture in a sample cuvette to achieve a desired count rate (K) (e.g., K ranging from 250 to 500 counts/sec for diameter in the range of 10-300 nm, and K ranging from 100 to 250 counts/sec for diameter in the range of 300-500 nm). Then the particle size of the polymer dispersion was measured and reported as an average diameter by intensity.

GPC Analysis

Molecular weight of an emulsion polymer sample was measured by GPC analysis using an Agilent 1200. A sample was dissolved in tetrahydrofuran (THF)/ formic acid (FA) (5%) with a concentration of 2 mg/mL and then filtered through 0.45 μm polytetrafluoroethylene (PTFE) filter prior to the GPC analysis. The GPC analysis was conducted using the following conditions:
Column: One PLgel GUARD columns (10 μm, 50x7.5mm), One Mixed B columns (7.8x300mm) in tandem, column temperature: 40 °C; mobile phase: THF/FA (5%); flow rate: 1.0 mL/minute; Injection volume: 100 μL; detector: Agilent Refractive Index detector, 40°C; and calibration curve: PL Polystyrene Narrow standards with molecular weights ranging from 2329000 to 580 g/mol, using polynom 3 fitness.

Efflorescence Resistance Test

The efflorescence resistance of coatings was evaluated according to the JG/T 210-2007 method authorized by Construction Industry of People's Republic of China.

For a paint formulation, one layer (wet film thickness: 80 μm) of the paint formulation to be evaluated was applied over one side of a panel (fiber reinforced mid-density cement flat panel, size 150mm*70mm*4~6mm) with a brush. For a clear coating composition, the clear coating composition was applied over one side of a panel (the same type as above) with a brush to form two coats (wet film thickness: 80 μm for each coat).

The obtained test panels were allowed to dry in a constant temperature room (CTR, 23±2°C and 50% relative humidity (RH)) for 6 days. On the $6^{th}$ day in CTR, 0.5 g of an iron blue solution (Iron blue: 2% polyvinyl alcohol (PVA)=1:4 (weight/weight)) was applied on the surface of the panels with a brush and allowed to dry in CTR for another day. Then, the test panels were placed in a container containing an alkaline solution (2% NaOH solution in water), so that the uncoated side of the panels was dipped into the alkaline solution and the coated side didn't contact with the alkaline solution. After exposure for 144 hours, the panels were taken out from the container, allowed to dry in CTR for 24 hours, and observed the color change of the coated side by the naked eye. The area on the coated side that showed no color change was measured. Efflorescence resistance was reported as an efflorescence score determined by the percentage of the area with no color change to the total area of the coated side. The higher the score, the better the efflorescence resistance. An efflorescence score being 45% or higher is acceptable.

Weather Durability

The weather durability of paints was evaluated by a QUV test. Values of L*, a*, b* (CIELAB) before and after QUV exposure for 600 hours were measured by a colorimeter (Micromatch plus model from Sheen Company). The difference between b* (before QUV exposure) and b* (after QUV exposure) was defined as Δb, indicating the color change of paints after the QUV test.

A blue colorant (4% by weight of a paint formulation) was added into a paint formulation. The obtained colored paint formulation was then drawn down on the substrate of a QUV panel with a thickness of 150 μm. The obtained panels were cured at room temperature for 7 days, and then b* values (before QUV exposure) of the panels were measured. Thereafter, the panels were placed in a QUV equipment (Q-Lab Headquarters & Instruments Division UVA bulbs, with a wave length of 340 nm) for 600 hours. The panels were removed from the QUV equipment and allowed to dry for 18 hours, and b* values after QUV exposure were then measured. The lower the Δb value, the better the weather durability. Δb value being 1.5 or less means good weather durability. Otherwise, Δb value larger than 1.5 indicates poor weather durability.

Heat-age Stability

A Stormer Viscosity Meter was used to test the viscosity of a coating composition according to the ASTM D562 method. After the coating composition was prepared, an initial medium shear viscosity, Initial Krebs Units (KU), of the coating composition was tested at room temperature, then the coating composition was balanced at room temperature overnight. The coating composition was then placed in an oven at 50°C for 10 days. The viscosity of the coating composition after storage was then tested and recorded as Final KU. The difference between Initial KU and Final KU was defined as the viscosity change, ΔKU. The smaller the ΔKU value, the better the heat-age stability. A coating composition

showing ΔKU of 10 KU or less is considered to be passed. Otherwise, if ΔKU is larger than 10 KU, the coating composition failed the heat-age stability test.

Synthesis of Dispersion A1

Firstly, a monomer mixture was prepared by mixing 393.84 grams (g) of deionized (DI) water, 363.14 g of EHA, 597.37 g of ST, 30.60 g of MAA, 216.45 g of MMA, 3.62 g of n-DDM, and 7.65 g of Fes-32 surfactant.

Secondly, in a one gallon vessel equipped with a reflux condenser and a stirrer, 1335.62 g of DI water was added at an agitation rate of 130 RPM. The temperature of the reaction vessel was raised to 90 °C at the same time. Then 61.20 g of Fes-32 surfactant was introduced into the reaction vessel.

Thirdly, 41.22 g of the monomer mixture, a buffer solution consisting of 2.40 g of $Na_2CO_3$ and 27.40 g of DI water, and an initiator solution consisting of 4.31 g of APS and 27.40 g of DI water were injected into the reaction vessel. The reaction mixture was being held at a temperature between 80 and 90 °C for 5 minutes. Thereafter, the remainder of the monomer mixture was added into the reaction vessel over the span of 120 minutes. At the 50% of the monomer mixture was added into the reaction vessel, 1.86 g of A-171 was then added into the monomer mixture. During addition of the monomer mixture, another shot of an initiator solution consisting of 2.46 g of APS and 136.99 g of DI water was co-fed into the reaction vessel over the span of 120 minutes. The reaction temperature was being held at somewhere between 87 to 89 °C. After the above mixing steps were completed, the reaction vessel was cooled down. While cooling the contents in the reaction vessel to room temperature, an initial reductant solution consisting of 0.0113 g of Ferrous Sulfate, 0.0113 g of EDTA and 6.78 g of DI water, a secondary reductant solution consisting of 1.81 g of IAA and 41.10 g of DI water, and an initiator solution consisting of 3.45 g of t-BHP and 37.67 g of DI water, were injected into the reaction vessel when the temperature had dropped to 70 °C. Finally, an adjustable amount of ammonia solution was added to the resultant dispersion to keep the pH between 7.5 and 8.5 when the temperature reached 50 °C. Then Dispersion A1 was obtained.

Synthesis of Dispersion A2

Firstly, monomer mixture 1# (ME1) was prepared by mixing 275.69 g of DI water, 25.70 g of AM, 3.73 g of SSS, 254.20 g of EHA, 308.43 g of ST, 241.86 g of MMA, 7.24 g of n-DDM and 10.89 g of FES-32 surfactant (31%). And monomer mixture 2# (ME2) was prepared by mixing 118.15 g of DI water, 11.02 g of AM, 108.94 g of EHA, 101.68 g of ST, 86.98 g of MMA, 54.25 g of GMA and 4.68 g of FES-32 surfactant (31%).

Secondly, in a one gallon vessel equipped with a reflux condenser and a stirrer, 1335.62 g of DI water was added at an agitation rate of 130 RPM. The temperature of the reaction vessel was raised to 90 °C at the same time. Then 62.23 g of FES-32 surfactant was introduced into the reaction vessel.

Thirdly, 41.22 g of ME1 and an initiator solution consisting of 4.31 g of APS and 27.40 g of DI water were injected into the reaction vessel. The reaction mixture was being held at a temperature between 80 and 90 °C for 5 minutes. Thereafter, the remainder of ME1 was added into the reaction vessel over the span of 84 minutes. At the 71.4% of ME1 was added into the reaction vessel, 23.58 g of MEUA and 1.74 g of A-171 were added into ME1. After completing the feed of ME1, ME2 was added into the reaction vessel over the span of 36 minutes. During addition of ME1 and ME2, another shot of an initiator solution consisting of 2.46 g of APS and 86.99 g of DI water was co-fed into the reaction vessel over the span of 120 minutes. The reaction temperature was being held at somewhere between 86 to 88 °C. After the above mixing steps were completed, the reaction vessel was cooled down. While cooling the contents of the reaction vessel to room temperature, an initial reductant solution consisting of 0.0113 g of ferrous sulfate, 0.0113 g of EDTA and 6.78 g of DI water, a secondary reductant solution consisting of 2.00 g of FF6 and 41.10 g of DI water, and an initiator solution consisting of 3.45 g of t-BHP and 37.67 g of DI water, were injected into the reaction vessel when the temperature had dropped to 70 °C. Finally, an adjustable amount of NaOH solution was added to the resultant dispersion to keep the pH between 7.0 and 8.0 when the temperature had reached 50 °C. Thus, Dispersion A2 was obtained. The polymer in the Dispersion A2 had a weight average molecular weight of 55,385 as measured by GPC.

Synthesis of Dispersion A3

Dispersion A3 was prepared based on the procedure described above for preparing Dispersion A2, except the monomer composition and surfactant used were described below.

Firstly, monomer mixture 1# (ME1) was prepared by mixing 275.69 g of DI water, 25.70 g of AM, 3.73 g of SSS, 372.83 g of EHA, 249.12 g of ST, 182.66 g of MMA, 7.24g of n-DDM and 25.70 g of FES-32 surfactant (31%). And monomer mixture 2# (ME2) was prepared by mixing 118.15 g of DI water, 11.02 g of AM, 159.78 g of EHA, 76.26 g of ST, 61.61 g of MMA, 54.25 g of GMA and 11.71 g of FES-32 surfactant (31%).

Secondly, in a one gallon vessel equipped with a reflux condenser and a stirrer, 1350 g of DI water was added

at an agitation rate of 130 RPM. The temperature of the reaction vessel was raised to 90 °C at the same time. Then 23.43 g of FES-32 surfactant was introduced into the reaction vessel.

Thirdly, the following steps were substantially the same as preparing Dispersion A2.

Synthesis of Dispersions A4

Dispersion A4 was prepared based on the procedure described above for preparing Dispersion A2, except that the surfactants were added as follows:

Firstly, monomer mixture 1# (ME1) was prepared by mixing 275.69 g of DI water, 25.70 g of AM, 3.73 g of SSS, 254.20 g of EHA, 308.43 g of ST, 241.86 g of MMA, 7.24 g of n-DDM and 10.89 g of FES-32 surfactant (31%). And monomer mixture 2# (ME2) was prepared by mixing 118.15 g of DI water, 11.02 g of AM, 108.94 g of EHA, 101.68 g of ST, 86.98 g of MMA, 54.25 g of GMA and 4.68 g of FES-32 surfactant (31%).

Secondly, in a one gallon vessel equipped with a reflux condenser and a stirrer, 1335.62 g of DI water was added at an agitation rate of 130 RPM. The temperature of the reaction vessel was raised to 90 °C at the same time. Then 7.71 g of FES-32 surfactant was introduced into the reaction vessel.

Thirdly, the following steps were substantially the same as preparing Dispersion A2.

Synthesis of Dispersions A5

Dispersion A5 was prepared based on the procedure described above for preparing Dispersion A2, except that the monomer composition and surfactants were as follows,

Firstly, monomer mixture 1# (ME1) was prepared by mixing 275.69 g of DI water, 25.70 g of AM, 3.73 g of SSS, 372.83 g of EHA, 249.12 g of ST, 182.66 g of MMA, 7.24g of n-DDM and 30.06 g of FES-32 surfactant (31%). And monomer mixture 2# (ME2) was prepared by mixing 118.15 g of DI water, 11.02 g of AM, 159.78 g of EHA, 76.26 g of ST, 61.61 g of MMA, 54.25 g of GMA and 12.88 g of FES-32 surfactant (31%).

Secondly, in a one gallon vessel equipped with a reflux condenser and a stirrer, 1350 g of DI water was added at an agitation rate of 130 RPM. The temperature of the reaction vessel was raised to 90 °C at the same time. Then 7.71 g of FES-32 surfactant was introduced into the reaction vessel.

Thirdly, the steps were substantially the same as preparing Dispersion A2.

Synthesis of Dispersions A6

Dispersion A6 was prepared based on the procedure described above as preparing Dispersion A2, except that the monomer composition and surfactants were as follows,

First, monomer mixture 1# (ME1) was prepared by mixing 275.69 g of DI water, 25.70 g of AM, 3.73 g of SSS, 313.52 g of EHA, 278.78 g of ST, 212.26 g of MMA, 7.24g of n-DDM and 27.33 g of FES-32 surfactant (31%). And monomer mixture 2# (ME2) was prepared by mixing 118.15 g of DI water, 11.02 g of AM, 134.36 g of EHA, 88.97 g of ST, 74.29 g of MMA, 54.25 g of GMA and 11.71 g of FES-32 surfactant (31%).

Secondly, in a one gallon vessel equipped with a reflux condenser and a stirrer, 1100 g of DI water was added at an agitation rate of 130 RPM. The temperature of the reaction vessel was raised to 90 °C at the same time. Then 6.25 g of FES-32 surfactant was introduced into the reaction vessel.

Thirdly, the steps were substantially the same as preparing Dispersion A2.

Synthesis of Dispersions A7

Dispersion A7 was prepared based on the procedure described above for preparing Dispersion A2, except the surfactants were added as follows,

Firstly, monomer mixture 1# (ME1) was prepared by mixing 275.69 g of DI water, 25.70 g of AM, 3.73 g of SSS, 254.20 g of EHA, 308.43 g of ST, 241.86 g of MMA, 7.24 g of n-DDM and 24.30 g of FES-32 surfactant (31%). And monomer mixture 2# (ME2) was prepared by mixing 118.15 g of DI water, 11.02 g of AM, 108.94 g of EHA, 101.68 g of ST, 86.98 g of MMA, 54.25 g of GMA and 10.44 g of FES-32 surfactant (31%).

Secondly, in a one gallon vessel equipped with a reflux condenser and a stirrer, 1050 g of DI water was added at an agitation rate of 130 RPM. The temperature of the reaction vessel was raised to 90 °C at the same time. Then 3.86 g of FES-32 surfactant was introduced into the reaction vessel.

Thirdly, the following steps were substantially the same as preparing Dispersion A2.

Synthesis of Dispersions B1

Firstly, a monomer mixture was prepared by mixing 414.88 g of DI water, 49.03 g of AM, 549.97 g of BA, 7.66 g of MAA, 907.52 g of MMA, and 51.11 g of DS-4 (22.5%) surfactant.

Secondly, in a one gallon vessel equipped with a reflux condenser and a stirrer, 763.34 g of DI water was added at an agitation rate of 130 RPM. The temperature of the reaction vessel was raised to 88 °C at the same time. Then 8.89 g of DS-4 (22.5%) surfactant was introduced into the reaction vessel.

Thirdly, 71.98 g of the monomer mixture and an initiator solution consisting of 7.82 g of SPS and 33.30 g of DI water were injected into the reaction vessel. The reaction mixture was being held at a temperature between 80 and 90 °C for 5 minutes. Thereafter, the remainder of the monomer mixture was added into the reaction vessel over the span of 65 minutes. At the 50% of the monomer mixture was added into the reaction vessel, 1.90 g of ALMA was added into the monomer mixture. During addition of the monomer mixture, another shot of an initiator solution consisting of 1.56 g of SPS and 30.67 g of DI water was co-fed into the reaction vessel over the span of 65 minutes. The reaction temperature was being held at somewhere between 87 to 89 °C. After the above mixing steps have been completed, the reaction vessel was cooled down. While cooling the contents in the reaction vessel to room temperature, an initial reductant solution consisting of 0.0056 g of ferrous sulfate and 1.33 g of DI water, a secondary reductant solution consisting of 0.98 g of IAA and 22.00 g of DI water, and an initiator solution consisting of 0.91 g of t-BHP and 15.33 g of DI water, were injected into the reaction vessel when the temperature had dropped to 70 °C. Then a post-added solution consisting of 23.43 g of TERGITOL 15-S-40 and 10.67 g of DI water was added to the reaction vessel. Finally, an adjustable amount of NaOH solution was added to the resultant dispersion to keep the pH between 7.0 and 8.0 when the temperature had reached 50 °C. Thus, Dispersion B1 was obtained.

Synthesis of Dispersions B2

Dispersion B2 was prepared based on the procedure described above as preparing Dispersion B1, except that the surfactants were added as follows,

Firstly, a monomer mixture was prepared by mixing 414.88 g of DI water, 49.03 g of AM, 549.97 g of BA, 7.66 g of MAA, 907.52 g of MMA, and 43.79 g of DS-4(22.5%) surfactant.

Secondly, in a one gallon vessel equipped with a reflux condenser and a stirrer, 763.34 g of DI water was added at an agitation rate of 130 RPM. The temperature of the reaction vessel was raised to 88 °C at the same time. Then 16.17 g of DS-4(22.5%) surfactant was introduced into the reaction vessel.

Thirdly, the following steps are substantially the same as preparing Dispersion B1. The polymer in the obtained Dispersion B2 had a weight average molecular weight of 149,820 as measured by GPC.

Synthesis of Dispersions B3

Dispersion B3 was prepared based on the procedure described above as preparing Dispersion B1, except that the monomer composition were as follows,

Firstly, a monomer mixture was prepared by mixing 414.88 g of DI water, 15.32 g of AM, 549.97 g of BA, 22.98 g of MAA, 907.52 g of MMA, and 51.11 g of DS-4 surfactant.

Secondly, the following steps were substantially the same as preparing Dispersion B1.

Synthesis of Dispersion C

Dispersion C was prepared substantially the same as Example C2,2 of US2008/0118748A1. 478 g of DI water was charged to a 5 liter glass reactor fitted with stirring and temperature control. A monomer pre-emulsion was formed by mixing 30.67 g of a 22.5% aqueous solution of sodium dodecylbenzene sulfonate, 343.7 g of DI water, 2196.30 g of BA and 33.40 g of AA. The reactor contents were heated to 90 °C and 34.80 g of a 45% solids latex having a weight average particle diameter of 100 nm, 10 g of ammonium persulfate in 48 g of DI water and 1 g of sodium carbonate in 31 g of DI water were added to the reactor. The monomer pre-emulsion and a separate feed of 3.7 g of ammonium persulfate in 238.7 g of DI were then added to the reactor over 3 hours while maintaining the reactor contents at 85 °C. When 45% of the monomer pre-emulsion had been added to the reactor, 80.9 g of a 27.8% solids latex having a weight average particle diameter of 80 nm was added to the reactor. Upon completion of the addition of the monomer pre-emulsion to the reactor 0.008 g of ferrous sulfate heptahydrate and 0.008 g of EDTA in 13 g of DI water was added to the reactor, the reactor contents were gradually cooled, and unpolymerized monomers were reduced by the gradual addition of 4.2 g of 70% aqueous t-Butyl hydroperoxide in 48 g of DI water and 2.3 g of sodium sulfoxylate formaldehyde in 58 g of DI water. 8.7 g of 28% aqueous ammonia in 3 g of DI water was then added to raise the pH of the emulsion. The final emulsions had approximately 61.8% solids.

Properties of all dispersions prepared above are given in Table 1.

Table 1 Properties of dispersions

| Dispersion | $T_g$, °C | pH | Solid, % | Particle size ("PS"), nm |
|---|---|---|---|---|
| Dispersion A1 | 40.4 | | 35.52 | 62 |
| Dispersion A2 | 39.3 | 7.5 | 35.78 | 58 |
| Dispersion A3 | 18.6 | 7.83 | 36.88 | 76 |
| Dispersion A4 | 39.3 | 7.17 | 39.68 | 103 |
| Dispersion A5 | 18.6 | 7.29 | 40.06 | 120 |
| Dispersion A6 | 29.3 | 7.27 | 39.47 | 125 |
| Dispersion A7 | 39.3 | 7.53 | 40.08 | 145 |
| Dispersion B1 | 39 | 7.60 | 49.00 | 135 |
| Dispersion B2 | 39 | 7.73 | 49.61 | 114 |
| Dispersion B3 | 39 | 8.22 | 49.58 | 217 |
| Dispersion C | -42.68 | 7.32 | 61.67 | 69/ 406 |

Example (Ex) 1 Paint Formulation

The paint formulation of Ex 1 was prepared as follows,

Ingredients including 57.86 g of DI water, 0.73 g of NATROSOL 250 HBR, 5.47 g of propylene glycol, 0.40 g of ammonia (28%), 2.92 g of TAMOL 731A, 0.73 g of EF-106, 0.55 g of DISPELAIR CF256, 0.93 g of KATHON LXE, 18.23 g of Ti-Pure R-706, 54.68 g of CC-700, and 36.45 g of Talc AT-1 were mixed using a high speed Cowles disperser to form the grind.

Then, 240.9 g of a binder formed by mixing Dispersion A2 and Dispersion B1 at a weight ratio of 50:50 (Dispersion A2/Dispersion B1) was added into the grind. Then, 8.43 g of TEXANOL was added into the resultant mixture. DISPELAIR CF-256 (0.69 g), ACRYSOL RM-2020 NPR (2.5 g), and DI water (10 g) were further added to the mixture and mixed for 30 minutes using a conventional lab mixer. The resultant paint formulation of Ex 1 had 30% PVC and 35% volume solids.

Ex 2 Paint Formulation

The paint formulation of Ex 2 was prepared according to the same procedure as described above for preparing the paint formulation of Ex 1, except that the binder used in Ex 2 was 255.4 g of a mixture of Dispersion A2 and Dispersion B1 at a weight ratio of 75:25 (Dispersion A2/Dispersion B1).

Ex 3 Paint Formulation

The paint formulation of Ex 3 was prepared as follows,

Ingredients including 75.80 g of DI water, 0.95 g of NATROSOL 250 HBR, 0.95 g of AMP-95, 7.11g of propylene glycol, 0.47 g of NOPCO NXZ, 1.19 g of EF-106, 3.32 g Rocima 362N, 3.32 g of TAMOL 731A, 0.47 g of KATHON LXE, 75.87 g of Ti-Pure R-706, and 85.35 g of CC-700 were mixed using a high speed Cowles disperser to form the grind.

Then, 228.20 g of a binder formed by mixing Dispersion A3 and Dispersion B1 at a weight ratio of 50:50 (Dispersion A3/Dispersion B1) was added into the grind. Then, 8.35 g of TEXANOL was added into the resultant mixture. ROPAQUE Ultra E (12.24 g), NOPCO NXZ (0.73 g), ACRYSOLRM-8W (1.63 g), ACRYSOL RM-2020 NPR (4.98 g) and DI water (13.00 g) were further added to the mixture and mixed for 30 minutes using a conventional lab mixer. The resultant paint formulation of Ex 3 had 40% PVC and 35% volume solids.

Ex 4 Paint Formulation

The paint formulation of Ex 4 was prepared according to the same procedure as described above for preparing the paint formulation of Ex 3, except that the binder used in Ex 4 was 219.0 g of a mixture of Dispersion A4 and Dispersion B1 at a weight ratio of 50:50 (Dispersion A4/Dispersion B1).

Ex 5 Paint Formulation

The paint formulation of Ex 5 was prepared according to the same procedure as described above for preparing the paint formulation of Ex 3, except that the binder used in Ex 5 was 217.9 g of a mixture of Dispersion A5 and Dispersion B1 at a weight ratio of 50:50 (Dispersion A5/Dispersion B1).

Ex 6 Clear Coating Composition

The clear coating composition of Ex 6 was prepared by diluting an aqueous polymer composition into 10% solids, where the aqueous polymer composition was prepared by mixing 1,000 g of Dispersion A2 and 730.2 g of Dispersion B1 together.

Ex 7 Clear Coating Composition

The clear coating composition of Ex 7 was prepared by diluting an aqueous polymer composition into 10% solids, where the aqueous polymer composition was prepared by mixing 1,000 g of Dispersion A2 and 243.4 g of Dispersion B1 together.

Comparative (Comp) Ex 1 Paint Formulation

The paint formulation of Comp Ex 1 was prepared according to the same procedure as described above for preparing the paint formulation of Ex 1, except that the binder used in Comp Ex 1 was 283.0 g of Dispersion A1.

Comp Ex 2 Paint Formulation

The paint formulation of Comp Ex 2 was prepared according to the same procedure as described above for preparing the paint formulation of Ex 1, except that the binder used in Comp Ex 2 was 281.0 g of Dispersion A2.

Comp Ex 3 Paint Formulation

The paint formulation of Comp Ex 3 was prepared according to the same procedure as described above for preparing the paint formulation of Ex 1, except that the binder used in Comp Ex 3 was 205.0 g of Dispersion B1.

Comp Ex 4 Paint Formulation

The paint formulation of Comp Ex 4 was prepared according to the same procedure as described above for preparing the paint formulation of Ex 1, except that the binder used in Comp Ex 4 was 224.3 g of a mixture of Dispersion A2 and Dispersion B1 at a weight ratio of 25:75 (Dispersion A2/Dispersion B1).

Comp Ex 5 Paint Formulation

The paint formulation of Comp Ex 5 was prepared according to the same procedure as described above for preparing the paint formulation of Ex 1, except that the binder used in Comp Ex 5 was 228.5 g of a mixture of Dispersion A2 and Dispersion B1 at a weight ratio of 30:70 (Dispersion A2/Dispersion B1).

Comp Ex 6 Paint Formulation

The paint formulation of Comp Ex 6 was prepared according to the same procedure as described above for preparing the paint formulation of Ex 3, except that the binder used in Comp Ex 6 was 200.0 g of Dispersion B1.

Comp Ex 7 Paint Formulation

The paint formulation of Comp Ex 7 was prepared according to the same procedure as described above for preparing the paint formulation of Ex 3, except that the binder used in Comp Ex 7 was 224.1 g of a mixture of Dispersion A6 and Dispersion B1 at a weight ratio of 50:50 (Dispersion A6/Dispersion B1).

Comp Ex 8 Paint Formulation

The paint formulation of Comp Ex 8 was prepared according to the same procedure as described above for preparing the paint formulation of Ex 3, except that the binder used in Comp Ex 8 was 222.3 g of a mixture of Dispersion A7 and Dispersion B1 at a weight ratio of 50:50 (Dispersion A7/Dispersion B1).

Comp Ex 9 Paint Formulation

The paint formulation of Comp Ex 9 was prepared according to the same procedure as described above for preparing the paint formulation of Ex 3, except that the binder used in Comp Ex 9 was 232.9 g of a mixture of Dispersion A3 and Dispersion B2 at a weight ratio of 50:50 (Dispersion A3/Dispersion B2).

Comp Ex 10 Paint Formulation

The paint formulation of Comp Ex 10 was prepared according to the same procedure as described above for preparing the paint formulation of Ex 3, except that the binder used in Comp Ex 10 was 232.1 g of a mixture of Dispersion A3 and Dispersion B3 at a weight ratio of 50:50 (Dispersion A3/Dispersion B3).

Comp Ex 11 Paint Formulation

The paint formulation of Comp Ex 11 was prepared according to the same procedure as described above for preparing the paint formulation of Ex 3, except that the binder used in Comp Ex 11 was 158.0 g of Dispersion C.

Comp Ex 12 Clear Coating Composition

The clear coating composition of Comp Ex 12 was prepared by diluting Dispersion B1 into 10% solids.

The paint formulations and clear coating compositions obtained above were evaluated according to the test methods described above. Table 2 gives properties of paint formations with 30% PVC. Dispersion A1 and Dispersion A2 had a particle size of 62 nm and 58 nm, respectively. As shown in Table 2, paint formulations comprising Dispersion A1 or Dispersion A2 both demonstrated poor heat-age stability. The paint formulations comprising pure Dispersion B1 (Comp Ex 3), and Dispersion A2/Dispersion B1 blends at 25:75 (Comp Ex 4) or at 30:70 (Comp Ex 5) all showed poor efflorescence resistance, as indicated by an efflorescence score of 37%, 33%, and 40%, respectively. After introducing a mixture of Dispersion A2/Dispersion B1 at a weight ratio of 50:50, the efflorescence score of the paint formulation of Ex 1 increased to 70%. The paint formation of Ex 2 where the weight ratio of Dispersion A2 and Dispersion B was 75:25 showed an even better efflorescence resistance as indicated by the efflorescence score of 80%.

Table 2 Paint Formulations (PVC: 30%)

| Sample | Binder (weight ratio) | Efflorescence (%) | Heat-age Stability |
|---|---|---|---|
| Comp Ex 1 | Dispersion A1 | 50 | Failed |
| Comp Ex 2 | Dispersion A2 | 90 | Failed |
| Comp Ex 3 | Dispersion B1 | 37 | Passed |
| Comp Ex 4 | Dispersion A2/Dispersion B1 blend (25/75) | 33 | Passed |
| Comp Ex 5 | Dispersion A2/Dispersion B1 blend (30/70) | 40 | Passed |
| Ex 1 | Dispersion A2/Dispersion B1 blend (50/50) | 70 | Passed |
| Ex 2 | Dispersion A2/Dispersion B1 blend (75/25) | 80 | Passed |

Properties of paint formations with 40% PVC are given in Table 3. For paint formulations contained two types of dispersions, the weight ratio of the two dispersions were all at 50:50. The paint formulations comprising a blend of Dispersion B1 with Dispersions A3, A4 or A5 all showed good stability after heat aging (Exs 3, 4 and 5). Also, paints made from Exs 3, 4 and 5 all provided good efflorescence resistance, as indicated by an efflorescence score of 55%, 60% and 55%, respectively. In contrast, paints comprising Dispersion B1 showed an efflorescence score of only 5% (Comp Ex 6). In addition, the paint formulations of Comp Exs 7 and 8 comprising Dispersion A6 (PS=125 nm) and Dispersion A7 (PS=145 nm), respectively, showed much poorer efflorescence resistance than Exs 3, 4 and 5. Moreover, the paint formulation of Comp Ex 9 comprising Dispersion B2 with small polymer particles (PS=114 nm) failed the heat-age stability test. The paint formulation of Comp Ex 10 comprising Dispersion B3 comprising polymer particles with a high acid level (1.5%) provided paints with unacceptable efflorescence performance (score: 20%) and poor stability after heat aging. The paint formulation of Comp Ex 11 comprising Dispersion C ($T_g$ of polymer: -42.68°C) showed poor stability after heat aging.

Table 3 Paint Formulations (PVC: 40%)

| Sample | Binder (weight ratio) | Efflorescence (%) | Heat-age Stability |
|---|---|---|---|
| Comp Ex 6 | Dispersion B1 | 5 | Passed |
| Ex 3 | Dispersion A3/Dispersion B1 (50/50) | 55 | Passed |
| Ex 4 | Dispersion A4/Dispersion B1(50/50) | 60 | Passed |
| Ex 5 | Dispersion A5/Dispersion B1(50/50) | 55 | Passed |
| Comp Ex 7 | Dispersion A6/Dispersion B1(50/50) | 35 | Passed |
| Comp Ex 8 | Dispersion A7/Dispersion B1(50/50) | 10 | Passed |
| Comp Ex 9 | Dispersion A3/ Dispersion B2 (50/50) | 80 | Failed |
| Comp Ex 10 | Dispersion A3/ Dispersion B3 (50/50) | 20 | Failed |
| Comp Ex 11 | Dispersion C | 90 | Failed |

Weather durability of paints was also evaluated according to the test method described above. After 600 hours QUV test, paints comprising pure Dispersion B1 showed Δb value of 1.83 (Comp Ex 3). In contrast, after 600 hours QUV test, Δb values for paints comprising a mixture of Dispersion A2/Dispersion B1 at a weight ratio of 50:50 (Ex 1) or 75:25 (Ex 2) were 0.96 and 0.79, respectively. It indicates that the paint formulations of the present invention had better weather durability performance than the paint formulation of Comp Ex 3.

Table 4 gives properties of the clear coating compositions of Exs 6 and 7 and Comp Ex 12 and coatings made therefrom. As shown in Table 4, the coating compositions of Exs 6 and 7 comprising a mixture of Dispersion A2 and Dispersion B1 at a weight ratio of 50:50 and 75:25, respectively, provided coatings with improved efflorescence resistance, as compared to the coating composition of Comp Ex 12.

Table 4 Clear Coating Compositions

| Sample | Binder (dry weight ratio) | Efflorescent performance (%) | Paint H.A Stability |
|---|---|---|---|
| Comp Ex 12 | Dispersion B1 | 33 | Passed |
| Ex 6 | Dispersion A2/Dispersion B1 (50/50) | 85 | Passed |
| Ex 7 | Dispersion A2/Dispersion B1 (75/25) | 90 | Passed |

## Claims

1. An aqueous polymer composition comprising:

    a fine mode of first polymer particles and a large mode of second polymer particles,
    wherein the first polymer particles have an average diameter of from 55 nm to 120 nm and a glass transition temperature of from 0°C to 50°C, and wherein the first polymer particles comprise as polymerized units, based on the weight of the first polymer particles, from 0.1% to 20% by weight of an epoxy functional monomer and less than 0.5% by weight of an α, β-ethylenically unsaturated carboxylic acid; and
    wherein the second polymer particles have an average diameter of larger than 120 nm and comprise as polymerized units, based on the weight of the second polymer particles, less than 1.3% by weight of an α, β-ethylenically unsaturated carboxylic acid; and
    wherein the weight ratio of the first polymer particles to the second polymer particles is from 40:60 to 75:25.

2. The aqueous polymer composition of claim 1, wherein the first polymer particles have a weight average molecular weight of from 10,000 to 300,000.

3. The aqueous polymer composition of claim 1, wherein the weight ratio of the first polymer particles to the second polymer particles is from 50:50 to 75:25.

4. The aqueous polymer composition of claim 1, wherein the first polymer particles have an average diameter of from 55 nm to 100 nm.

5. The aqueous polymer composition of claim 1, wherein the second polymer particles have an average diameter of from 130 nm to 500 nm.

6. The aqueous polymer composition of claim 1, wherein the first and second polymer particles each independently further comprise, as polymerized units, an ethylenically unsaturated monomer carrying at least one functional group selected from amide, hydroxyl, ureido, sulfonate, or combinations thereof.

7. The aqueous polymer composition of claim 1, wherein the epoxy functional monomer is selected from glycidyl methacrylate, glycidyl acrylate, allyl glycidyl, or mixtures thereof.

8. The aqueous polymer composition of claim 1, wherein the first and second polymer particles each independently further comprise as polymerized units, a vinyl aromatic monomer, a $C_1$-$C_{20}$ alkyl (meth)acrylate ester, or mixtures thereof.

9. The aqueous polymer composition of claim 1, wherein the first polymer particles have a glass transition temperature of from 20°C to 40°C.

10. The aqueous polymer composition of claim 1, wherein the second polymer particles have a glass transition temperature of from 0°C to 50°C.

11. A coating composition comprising an aqueous polymer composition of any one of claims 1-10.

12. The coating composition of claim 11, further comprising a pigment.

13. A method of improving efflorescence resistance of a coating, comprising:

(i) providing a coating composition of claim 11 or 12,
(ii) applying the coating composition to a substrate; and
(iii) drying, or allowing to dry, the coating composition to obtain the coating having improved efflorescence resistance.

## Patentansprüche

1. Eine wässrige Polymerzusammensetzung, die Folgendes beinhaltet:

einen Feinmodus von ersten Polymerpartikeln und einen Großmodus von zweiten Polymerpartikeln,
wobei die ersten Polymerpartikel einen durchschnittlichen Durchmesser von 55 nm bis 120 nm und eine Glasumwandlungstemperatur von 0 °C bis 50 °C aufweisen und wobei die ersten Polymerpartikel als polymerisierte Einheiten, bezogen auf das Gewicht der ersten Polymerpartikel, zu 0,1 bis 20 Gew.-% ein epoxyfunktionelles Monomer und zu weniger als 0,5 Gew.-% eine $\alpha$-,$\beta$-ethylenisch ungesättigte Carbonsäure beinhalten; und
wobei die zweiten Polymerpartikel einen durchschnittlichen Durchmesser von größer als 120 nm aufweisen und als polymerisierte Einheiten, bezogen auf das Gewicht der zweiten Polymerpartikel, zu weniger als 1,3 Gew.-% eine $\alpha$-,$\beta$-ethylenisch ungesättigte Carbonsäure beinhalten; und
wobei das Gewichtsverhältnis der ersten Polymerpartikel zu den zweiten Polymerpartikeln von 40 : 60 bis 75 : 25 beträgt.

2. Wässrige Polymerzusammensetzung gemäß Anspruch 1, wobei die ersten Polymerpartikel ein gewichtsmittleres Molekulargewicht von 10 000 bis 300 000 aufweisen.

3. Wässrige Polymerzusammensetzung gemäß Anspruch 1, wobei das Gewichtsverhältnis der ersten Polymerpartikel zu den zweiten Polymerpartikeln von 50 : 50 bis 75 : 25 beträgt.

**4.** Wässrige Zusammensetzung gemäß Anspruch 1, wobei die ersten Polymerpartikel einen durchschnittlichen Durchmesser von 55 nm bis 100 nm aufweisen.

**5.** Wässrige Polymerzusammensetzung gemäß Anspruch 1, wobei die zweiten Polymerpartikel einen durchschnittlichen Durchmesser von 130 nm bis 500 nm aufweisen.

**6.** Wässrige Polymerzusammensetzung gemäß Anspruch 1, wobei die ersten und zweiten Polymerpartikel jeweils unabhängig ferner, als polymerisierte Einheiten, ein ethylenisch ungesättigtes Monomer beinhalten, das mindestens eine funktionelle Gruppe, ausgewählt aus Amid, Hydroxyl, Ureido, Sulfonat oder Mischungen davon, trägt.

**7.** Wässrige Polymerzusammensetzung gemäß Anspruch 1, wobei das epoxyfunktionelle Monomer aus Glycidylmethacrylat, Glycidylacrylat, Allylglycidyl oder Mischungen davon ausgewählt ist.

**8.** Wässrige Polymerzusammensetzung gemäß Anspruch 1, wobei die ersten und zweiten Polymerpartikel jeweils unabhängig ferner, als polymerisierte Einheiten, ein vinylaromatisches Monomer, einen $C_1$-$C_{20}$-Alkyl(meth)acrylatester oder Mischungen davon beinhalten.

**9.** Wässrige Polymerzusammensetzung gemäß Anspruch 1, wobei die ersten Polymerpartikel eine Glasübergangstemperatur von 20 °C bis 40 °C aufweisen.

**10.** Wässrige Polymerzusammensetzung gemäß Anspruch 1, wobei die zweiten Polymerpartikel eine Glasübergangstemperatur von 0 °C bis 50 °C aufweisen.

**11.** Eine Beschichtungszusammensetzung, die eine wässrige Polymerzusammensetzung gemäß einem der Ansprüche 1-10 beinhaltet.

**12.** Beschichtungszusammensetzung gemäß Anspruch 11, die ferner ein Pigment beinhaltet.

**13.** Ein Verfahren zum Verbessern des Effloreszenswiderstands einer Beschichtung, das Folgendes beinhaltet:

(i) Bereitstellen einer Beschichtungszusammensetzung gemäß Anspruch 11 oder 12,
(ii) Aufbringen der Beschichtungszusammensetzung auf ein Substrat; und
(iii) Trocknen oder Trocknenlassen der Beschichtungszusammensetzung, um eine Beschichtung zu erhalten, die verbesserten Effloreszenzwiderstand aufweist.

## Revendications

**1.** Une composition de polymère aqueuse comprenant :

un grain fin de premières particules de polymère et un grain grossier de deuxièmes particules de polymère,
dans laquelle les premières particules de polymère ont un diamètre moyen allant de 55 nm à 120 nm et une température de transition vitreuse allant de 0 °C à 50 °C, et dans laquelle les premières particules de polymère comprennent, sous forme d'unités polymérisées, rapporté au poids des premières particules de polymère, de 0,1 % à 20 % en poids d'un monomère à fonctionnalité époxy et moins de 0,5 % en poids d'un acide carboxylique $\alpha$, $\beta$-éthyléniquement insaturé ; et
dans laquelle les deuxièmes particules de polymère ont un diamètre moyen plus grand que 120 nm et comprennent, sous forme d'unités polymérisées, rapporté au poids des deuxièmes particules de polymère, moins de 1,3 % en poids d'un acide carboxylique $\alpha$, $\beta$-éthyléniquement insaturé ; et
dans laquelle le rapport en poids des premières particules de polymère aux deuxièmes particules de polymère va de 40/60 à 75/25.

**2.** La composition de polymère aqueuse de la revendication 1, dans laquelle les premières particules de polymère ont une masse moléculaire moyenne en poids allant de 10 000 à 300 000.

**3.** La composition de polymère aqueuse de la revendication 1, dans laquelle le rapport en poids des premières particules de polymère aux deuxièmes particules de polymère va de 50/50 à 75/25.

**4.** La composition de polymère aqueuse de la revendication 1, dans laquelle les premières particules de polymère ont un diamètre moyen allant de 55 nm à 100 nm.

**5.** La composition de polymère aqueuse de la revendication 1, dans laquelle les deuxièmes particules de polymère ont un diamètre moyen allant de 130 nm à 500 nm.

**6.** La composition de polymère aqueuse de la revendication 1, dans laquelle chacune parmi les premières et les deuxièmes particules de polymère comprennent en outre indépendamment, sous forme d'unités polymérisées, un monomère éthyléniquement insaturé portant au moins un groupe fonctionnel sélectionné parmi l'amide, l'hydroxyle, l'uréido, le sulfonate, ou des combinaisons de ceux-ci.

**7.** La composition de polymère aqueuse de la revendication 1, dans laquelle le monomère à fonctionnalité époxy est sélectionné parmi le méthacrylate de glycidyle, l'acrylate de glycidyle, l'allyle glycidyle, ou des mélanges de ceux-ci.

**8.** La composition de polymère aqueuse de la revendication 1, dans laquelle chacune parmi les premières et les deuxièmes particules de polymère comprennent en outre indépendamment, sous forme d'unités polymérisées, un monomère aromatique vinylique, un ester de (méth)acrylate d'alkyle en $C_1$ à $C_{20}$, ou des mélanges de ceux-ci.

**9.** La composition de polymère aqueuse de la revendication 1, dans laquelle les premières particules de polymère ont une température de transition vitreuse allant de 20 °C à 40 °C.

**10.** La composition de polymère aqueuse de la revendication 1, dans laquelle les deuxièmes particules de polymère ont une température de transition vitreuse allant de 0 °C à 50 °C.

**11.** Une composition de revêtement comprenant une composition de polymère aqueuse de n'importe laquelle des revendications 1 à 10.

**12.** La composition de revêtement de la revendication 11, comprenant en outre un pigment.

**13.** Un procédé d'amélioration de la résistance à l'efflorescence d'un revêtement, comprenant :

(i) l'apport d'une composition de revêtement de la revendication 11 ou de la revendication 12,
(ii) l'application de la composition de revêtement sur un substrat ; et
(iii) le séchage de, ou le fait de laisser sécher, la composition de revêtement afin d'obtenir le revêtement pourvu d'une résistance à l'efflorescence améliorée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7105593 B2
- US 20080118748 A1